# EUROPÄISCHE PATENTSCHRIFT

(11) **EP 2 274 750 B1**
(45) Veröffentlichungstag und Bekanntmachung des Hinweises auf die Patenterteilung: **15.06.2016**
(21) Anmeldenummer: 09738092.7
(22) Anmeldetag: 27.04.2009
(51) Int. Cl.: H01F 1/01

(54) **OFFENZELLIGER, PORÖSER FORMKÖRPER FÜR WÄRMETAUSCHER**
OPEN-CELLED, POROUS SHAPED BODY FOR HEAT EXCHANGERS
CORPS MOULÉ POREUX À CELLULES OUVERTES POUR ÉCHANGEURS THERMIQUES

(30) Priorität: 28.04.2008 EP 08155255
(43) Veröffentlichungstag der Anmeldung: 19.01.2011
(73) Patentinhaber: BASF SE, 67056 Ludwigshafen am Rhein (DE)
(72) Erfinder: REESINK, Bernard Hendrik, NL-3454 PK De Meern (NL)
(74) Vertreter: BASF IP Association
(86) Internationale Anmeldenummer: PCT/EP2009/055023
(87) Internationale Veröffentlichungsnummer: WO 2009/133048

(56) Entgegenhaltungen:
- DE-A1-102006 015 370
- DE-A1-102006 046 041
- US-B1- 6 725 668
- J.A. LOZANO ET AL.: "Porous manganese-based magnetocaloric material for magnetic refrigeration at room temperature" JOURNAL OF MAGNETISM AND MAGNETIC MATERIALS, Bd. 320, 21. Februar 2008 (2008-02-21), Seiten E189-E192, XP002534632

## Beschreibung

Thermomagnetische Materialien, auch als magnetokalorische Materialien bezeichnet, können zur Kühlung, beispielsweise in Kühlschränken oder Klimaanlagen, in Wärmepumpen oder zur direkten Gewinnung von Strom aus Wärme ohne Zwischenschaltung einer Umwandlung in mechanische Energie eingesetzt werden.

Derartige Materialien sind prinzipiell bekannt und beispielsweise in WO 2004/068512 beschrieben. Die magnetischen Kühlungstechniken basieren auf dem magnetokalorischen Effekt (MCE) und können eine Alternative zu den bekannten Dampf-KreislaufKühlverfahren darstellen. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt wird oder entfernt wird, gehen die magnetischen Momente wieder in eine Zufallsanordnung über, was zu einem Abkühlen des Materials unter Umgebungstemperatur führt. Dieser Effekt kann zu Kühlzwecken ausgenutzt werden, siehe auch Nature, Vol. 415, 10. Januar 2002, Seiten 150 bis 152. Typischerweise wird ein Wärmetransfermedium wie Wasser zur Wärmeabfuhr aus dem magnetokalorischen Material eingesetzt.

Die in thermomagnetischen Generatoren eingesetzten Materialien basieren ebenfalls auf dem magnetokalorischen Effekt. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt oder entfernt wird, gehen die magnetischen Momente wieder in eine Zufallsanordnung über, was zu einem Abkühlen des Materials unter Umgebungstemperatur führt. Dieser Effekt kann einerseits zu Kühlzwecken ausgenutzt werden, andererseits, um Wärme in elektrische Energie umzuwandeln.

Die magnetokalorische Erzeugung von elektrischer Energie ist verbunden mit der magnetischen Heizung und Kühlung. In den Zeiten der ersten Konzipierung wurde das Verfahren zur Energieerzeugung als pyromagnetische Energieerzeugung beschrieben. Verglichen mit Vorrichtungen der Peltier- oder Seebeck-Typs können diese magnetokalorischen Vorrichtungen eine wesentlich höhere Energieeffizienz aufweisen.

Die Forschung zu diesem physikalischen Phänomen begann im späten 19. Jahrhundert, als zwei Wissenschaftler, Tesla und Edison, pyromagnetische Generatoren zum Patent anmeldeten. Im Jahr 1984 beschrieb Kirol zahlreiche mögliche Anwendungen und führte thermodynamische Analysen davon durch. Damals wurde Gadolinium als ein potentielles Material für Anwendungen nahe Raumtemperatur angesehen.

Ein pyromagneto-elektrischer Generator ist beispielsweise von N. Tesla in US 428,057 beschrieben. Es ist angegeben, dass die magnetischen Eigenschaften von Eisen oder anderen magnetischen Substanzen teilweise oder ganz zerstört werden können oder verschwinden können durch Erhitzen auf eine bestimmte Temperatur. Beim Abkühlen werden die magnetischen Eigenschaften wiederhergestellt und kehren in den Ausgangszustand zurück. Dieser Effekt kann ausgenutzt werden, um elektrischen Strom zu erzeugen. Wird ein elektrischer Leiter einem variierenden Magnetfeld ausgesetzt, führen die Veränderungen des Magnetfelds zur Induzierung eines elektrischen Stroms im Leiter. Wird beispielsweise das magnetische Material von einer Spule umschlossen und sodann in einem permanenten Magnetfeld erhitzt und nachfolgend abgekühlt, so wird jeweils beim Aufwärmen und Abkühlen ein elektrischer Strom in der Spule induziert. Hierdurch kann Wärmeenergie in elektrische Energie umgewandelt werden, ohne dass zwischenzeitlich eine Umwandlung in mechanischer Arbeit erfolgt. In dem von Tesla beschriebenen Verfahren wird Eisen als magnetische Substanz über einen Ofen oder eine geschlossene Feuerstelle erhitzt und nachfolgend wieder abgekühlt.

Für die thermomagnetischen oder magnetokalorischen Anwendungen sollte das Material einen effizienten Wärmeaustausch zulassen, um hohe Wirkungsgrade erreichen zu können. Sowohl bei der Kühlung als auch bei der Stromerzeugung wird das thermomagnetische Material in einem Wärmetauscher eingesetzt.

Aufgabe der vorliegenden Erfindung ist die Bereitstellung von Verfahren zur Herstellung thermomagnetischer Formkörper, die zum Einsatz in Wärmetauschern, insbesondere für Kühlzwecke oder zur Stromerzeugung, geeignet sind. Dabei sollen die Formkörper eine hohe Wärmeübertragung erlauben, einen geringen Durchflusswiderstand für Wärmetauschermedien aufweisen und eine hohe magnetokalorische Dichte besitzen.

Die Aufgabe wird erfindungsgemäß wie in den Ansprüchen definiert gelöst durch ein Verfahren zur Herstellung von offenzelligen, porösen Formkörpern für Wärmetauscher, die magnetische Kühlung oder Wärmepumpen oder thermomagnetische Generatoren, die ein thermomagnetisches Material enthalten, das ausgewählt ist aus
(1) Verbindungen der allgemeinen Formel (I)

   (A_{y}B₁-_{y})_{2+δ}C_{w}DₓE_{z} (I)

   mit der Bedeutung
   - A: Mn oder Co,
   - B: Fe, Cr oder Ni,
   - C, D, E: mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge oder Si ist,
   - δ: Zahl im Bereich von - 0,1 bis 0,1
   - w, x, y, z: Zahlen im Bereich von 0 bis 1, wobei w + x + z = 1 ist;
(2) auf La und Fe basierenden Verbindungen der allgemeinen Formeln (II) und/oder (III) und/oder (IV)

   La(FeₓAl₁₋ₓ)₁₃H_{y} oder La(FeₓSi₁-ₓ)₁₃H_{y} (II)

   mit
   - x: Zahl von 0,7 bis 0,95
   - y: Zahl von 0 bis 3, vorzugsweise 0 bis 2;

   La(FeₓAl_{y}Co_{z})₁₃ oder La(FeₓSi_{y}Co_{z})₁₃ (III)

   mit
   - x: Zahl von 0,7 bis 0,95
   - y: Zahl von 0,05 bis 1 - x
   - z: Zahl von 0,005 bis 0,5;

   LaMnₓFe₂-ₓGe (IV)

   mit
   - x: Zahl von 1,7 bis 1,95 und
(3) Heusler-Legierungen des Typs MnTP mit T Übergangsmetall und P einem p-dotierenden Metall mit einem elextron count pro Atom e/a im Bereich von 7 bis 8,5,
(4) auf Gd und Si basierenden Verbindungen der allgemeinen Formel (V)

   Gd₅(SiₓGe₁-ₓ)₄ (V)

   mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)

   Tb₅(Si₄-ₓGeₓ) (VI)

   mit x = 0, 1, 2, 3, 4

   XTiGe (VII)

   mit X = Dy, Ho, Tm,
(8) auf Mn und Sb oder As basierenden Verbindungen der allgemeinen Formeln (VIII) und (IX)

   Mn₂₋ₓZₓSb (VIII)

   Mn₂ZₓSb₁₋ₓ (IX)

   mit
   - Z: Cr, Cu, Zn, Co, V, As, Ge,
   - x: 0,01 bis 0,5,
   wobei Sb durch As ersetzt sein kann, sofern Z nicht As ist.

Es wurde gefunden, dass die vorstehenden thermomagnetischen Materialien vorteilhaft in Wärmetauschern, der magnetischen Kühlung, Wärmepumpen oder thermomagnetischen Generatoren oder Regeneratoren eingesetzt werden können, wenn sie eine offenzellige, poröse Struktur aufweisen.

Erfindungsgemäß beträgt die Porosität 30 bis 60%.

Der Begriff "offenzellig" bedeutet, dass der Formkörper durchgehende Kanäle aufweist, die durch miteinander verbundene Poren gebildet werden. Dies erlaubt den Durchfluss eines flüssigen Wärmeträgermediums wie Wasser, Wasser/Alkohol-Gemische, Wasser/Salz-Gemische oder Gase wie Luft oder Edelgase. Bevorzugt werden Wasser oder Wasser/Alkohol-Gemische eingesetzt, wobei der Alkohol ein ein- oder mehrwertiger Alkohol sein kann. Beispielsweise kann es sich um Glykole handeln.

Die Porosität, die Porengrößenverteilung und der Anteil durchgehender Kanäle kann nach den praktischen Erfordernissen eingestellt werden. Die Porosität sollte ausreichend hoch sein, so dass eine schnelle Wärmeabfuhr durch ein fluides Wärmeübertragungsmedium erreicht werden kann. Bei einer schnellen Wärmeabfuhr kann das Material mit hoher Frequenz in das Magnetfeld eingebracht oder aus ihm wieder entfernt werden. In diesem Fall ist die Porosität hoch. Um eine große Wärmemenge austauschen zu können ist eine große Materialmenge und damit eine niedrige Porosität notwendig. Bei einer niedrigen Porosität kann eine große Materialmenge in das Magnetfeld eingebracht werden, und viel Wärme kann übertragen werden. Der Wärmeaustausch über ein Wärmeträgermedium kann hierdurch jedoch beeinträchtigt werden. Im Ergebnis kann die Porosität nach den jeweiligen Anforderungen frei gewählt werden, auch in Übereinstimmung mit dem eingesetzten thermomagnetischen Material.

Gemäß der Erfindung weist der Formkörper daher eine geringe bis mittlere Porosität von vorzugsweise 30 bis 60 % besonders bevorzugt 30 bis 50 % auf.

Die Porosität ist dabei jeweils auf das Volumen bezogen.

Der mittlere Porendurchmesser beträgt vorzugsweise 0,1 bis 300 µm, besonders bevorzugt 0,3 bis 200 µm. Auch der mittlere Porendurchmesser kann nach den jeweiligen Anforderungen eingestellt werden.

Der Porendurchmesser kann über die Korngrößenverteilung bei der Herstellung des Formkörpers eingestellt werden, wenn der Formkörper durch Sintern eines Granulats, Pulvers oder Kompaktats hergestellt wird. Typischerweise ist der mittlere Porendurchmesser um den Faktor 15 bis 40, insbesondere 20 bis 30 kleiner als der mittlere Korndurchmesser.

Erfindungsgemäß beträgt der Anteil an offenen Poren vorzugsweise mindestens 30 %, besonders bevorzugt mindestens 60 %, insbesondere mindestens 80 %, bezogen auf das Porenvolumen.

Sofern Strömungskanäle vorliegen, liegt das Volumen der Strömungskanäle, bezogen auf das Gesamtvolumen des porösen Formkörpers im Bereich von 30 bis 60 %.

Gemäß einer Ausführungsform weisen die Formkörper ein Verhältnis von Oberfläche zu Volumen von mindestens 250 m²/m³ auf. Gemäß einer speziellen Ausführungsform kann das Verhältnis von Oberfläche zu Volumen auch mindestens 500 m²/m³ betragen. Dabei wird die Oberfläche nach dem BET-Verfahren bestimmt, das Porenvolumen durch Quecksilberporosimetrie. Auch optische Untersuchungsmethoden können eingesetzt werden.

Gemäß einer anderen erfindungsgemäßen Ausführungsform beträgt die mittlere Porengröße 250 bis 5100 µm, besonders bevorzugt 635 bis 5100 µm. Ein mittlerer Porendurchmesser von 250 µm bis 5100 µm entspricht etwa 100 ppi (Poren pro Inch) bis 5 ppi. Dabei entspricht 1 ppi etwa 0,0254 Poren pro m.

Für eine Beschreibung geeigneter Porositäten kann zudem auf US 2003/0116503 und DE-A-102 08 711 verwiesen werden.

Die erfindungsgemäß eingesetzten Materialien sind prinzipiell bekannt und zum Teil beispielsweise in WO 2004/068512 beschrieben.

Dabei ist das metallbasierte Material ausgewählt aus den vorstehenden Verbindungen (1) bis (8).

Besonders bevorzugt sind erfindungsgemäß die metallbasierten Materialien ausgewählt aus den Verbindungen (1), (2) und (3) sowie (5).

Erfindungsgemäß besonders geeignete Materialien sind beispielsweise in WO 2004/068512, Rare Metals, Vol. 25, 2006, Seiten 544 bis 549, J. Appl. Phys. 99,08Q107 (2006), Nature, Vol. 415, 10. Januar 2002, Seiten 150 bis 152 und Physica B 327 (2003), Seiten 431 bis 437 beschrieben.

In den vorstehend genannten Verbindungen der allgemeinen Formel (I) sind bevorzugt C, D und E identisch oder unterschiedlich und ausgewählt aus mindestens einem von P, Ge, Si, Sn und Ga.

Das metallbasierte Material der allgemeinen Formel (I) ist vorzugsweise ausgewählt aus mindestens quarternären Verbindungen, die neben Mn, Fe, P und gegebenenfalls Sb zudem Ge oder Si oder As oder Ge und Si, Ge und As oder Si und As oder Ge, Si und As enthalten.

Bevorzugt sind mindestens 90 Gew.-%, besonders bevorzugt mindestens 95 Gew.-% der Komponente A Mn. Bevorzugt sind mindestens 90 Gew.-%, besonders bevorzugt mindestens 95 Gew.-% von B Fe. Bevorzugt sind mindestens 90 Gew.-%, besonders bevorzugt mindestens 95 Gew.-% von C P. Bevorzugt sind mindestens 90 Gew.-%, besonders bevorzugt mindestens 95 Gew.-% von D Ge. Bevorzugt sind mindestens 90 Gew.-%, besonders bevorzugt mindestens 95 Gew.-% von E Si.

Vorzugsweise hat das Material die allgemeine Formel MnFe(P_{w}GeₓSi_{z}).
Bevorzugt ist x eine Zahl im Bereich von 0,3 bis 0,7, w ist kleiner oder gleich 1-x und z entspricht 1-x-w.

Das Material hat vorzugsweise die kristalline hexagonale Fe₂P-Struktur. Beispiele geeigneter Strukturen sind MnFeP_{0,45 bis 0,7}, Ge_{0,55 bis 0,30} und MnFeP_{0,5 bis 0,70}, (Si/Ge)_{0,5 bis 0,30}.

Geeignete Verbindungen sind ferner Mₙ₁₊ₓFe₁-ₓP_{1-y}Ge_{y} mit x im Bereich von -0,3 bis 0,5, y im Bereich von 0,1 bis 0,6. Ebenfalls geeignet sind Verbindungen der allgemeinen Formel Mn₁₊ₓFe₁₋ₓP_{1-y}Ge_{y-z}Sb_{z} mit x im Bereich von -0,3 bis 0,5, y im Bereich von 0,1 bis 0,6 und z kleiner als y und kleiner als 0,2. Ferner sind Verbindungen der Formel Mn₁₊ₓFe₁₋ₓP_{1-y}Ge_{y-z}Si_{z} geeignet mit x Zahl im Bereich von 0,3 bis 0,5, y im Bereich von 0,1 bis 0,66, z kleiner oder gleich y und kleiner als 0,6.

Geeignet sind ferner weitere Fe₂P-basierte Verbindungen ausgehend von Fe₂P und FeAs₂, gegebenenfalls Mn und P. Sie entsprechen beispielsweise den allgemeinen Formeln MnFe₁₋ₓCoₓGe, mit x = 0,7 - 0,9, Mn₅₋ₓFeₓSi₃ mit x = 0 - 5, Mn₅Ge₃₋ₓSiₓ mit x = 0,1 - 2, Mn₅Ge₃₋ₓSbₓ mit x = 0 - 0,3, Mn₂-ₓFeₓGe₂ mit x = 0,1 - 0,2, (Fe₁₋ₓMnₓ)₃C mit x =...-..., Mn₃₋ₓCoₓGaC mit x = 0 - 0,05.

Bevorzugte auf La und Fe basierende Verbindungen der allgemeinen Formeln (II) und/oder (III) und/oder (IV) sind La(Fe_{0,90}Si_{0,10})₁₃, La(Fe_{0,89}Si_{0,11})₁₃, La(Fe_{0,880}Si_{0,120})₁₃, La(Fe_{0,877}Si_{0,123})₁₃, LaFe_{11,8}Si_{1,2}, La(Fe_{0,88}Si_{0,12})₁₃H_{0,5}, La(Fe_{0,88}Si_{0,12})₁₃H_{1,0}, LaFe_{11,7}Si_{1,3}H_{1,1}, LaFe_{11,57}Si_{1,43}H_{1,3}, La(Fe_{0,88}Si_{0,12})H_{1,5}, LaFe_{11,2}C0_{0,7}S1_{1,1}, LaFe_{11,5}Al_{1,5}C_{0,1}, LaFe_{11,5}Al_{1,5}C_{0,2}, LaFe_{11,5}Al_{1,5}C_{0,4}, LaFe_{11,5}Al_{1,5}CO_{0,5}, La(Fe_{0,94}Co_{0,06})_{11,83}Al_{1,17}, La(Fe_{0,92}Co_{0,08})_{11,83}Al_{1,17}.

Geeignete Mangan enthaltende Verbindungen sind MnFeGe, MnFe₀,₉Co₀,₁Ge, MnFe_{0,8}Co_{0,2}Ge, MnFe_{0,7}Co_{0,3}Ge, MnFe_{0,6}Co_{0,4}Ge, MnFe_{0,5}Co_{0,5}Ge, MnFe_{0,4}Co_{0,6}Ge, MnFe_{0,3}Co_{0,7}Ge, MnFe_{0,2}Co_{0,8}Ge, MnFe_{0,15}Co_{0,85}Ge, MnFe_{0,1}Co_{0,9}Ge, MnCoGe, Mn₅Ge_{2,5}Si_{0,5}, M n₅Ge₂Si, Mn₅Ge_{1,5}Si_{1,5}, Mn₅GeSi₂, Mn₅Ge₃, Mn₅Ge₂,gSb_{0,1}, Mn₅Ge_{2,8}Sb_{0,2}, Mn₅Ge_{2,7}Sb_{0,3}, LaMn_{1,9}Fe_{0,1}Ge, LaMn_{1,85}Fe_{0,15}Ge, LaMn_{1,8}Fe_{0,2}Ge, (Fe_{0,9}Mn_{0,1})₃C, (Fe₀,₈Mn₀,₂)₃C, (Fe_{0,7}Mn_{0,3})₃C, Mn₃GaC, MnAs, (Mn, Fe)As, Mn_{1+δ}As_{0,8}Sb_{0,2}, MnAs_{0,75}Sb_{0,25}, Mn_{1,1}As_{0,75}Sb_{0,25}, Mn_{1,5}AS_{0,75}Sb_{0,25}.

Erfindungsgemäß geeignete Heusler-Legierungen sind beispielsweise Ni₂MnGa, Fe₂MnSi₁₋ₓGeₓ mit x = 0 - 1 wie Fe₂MnSi_{0,5}Ge_{0,5}, Ni_{52,9}Mn_{22,4}Ga_{24.7}, Ni_{50,9}Mn_{24,7}Ga_{24,4}, Ni_{55,2}Mn_{18,6}Ga_{26,2}, N i_{51,6}Mn_{24,7}Ga_{23,8}, Ni_{52,7}Mn_{23,9}Ga_{23,4}, CoMnSb, CONb_{0,2}Mn_{0,8}Sb, CoNb_{0,4}Mn_{0,6}SB, CoNb_{0,6}Mn_{0,4}Sb, Ni₅₀Mn₃₅Sn₁₅, Ni₅₀Mn₃₇Sn₁₃, MnFeP_{0,45}As_{0,55}, MnFeP_{0,47}As_{0,53}, Mn_{1,1}Fe_{0,9}P_{0,47}As_{0,53}, MnFeP_{0,89-X}Si_{X}Ge_{0,11}, X = 0,22, X = 0,26, X = 0,30, X = 0,33.

Weiterhin geeignet sind Fe₉₀Zr₁₀, Fe₈₂Mn₈Zr₁₀, Co₆₆Nb₉Cu₁Si₁₂B₁₂, Pd₄₀Ni_{22,5}Fe_{17,5}P₂₀, FeMoSiBCuNb, Gd₇₀Fe₃₀, GdNiAl, NdFe₁₂B₆GdMn₂.

Manganite des Perovskit-Typs sind beispielsweise La_{0,6}Ca_{0,4}MnO₃, La_{0,67}Ca_{0,33}MnO₃, La_{0,8}Ca_{0,2}MnO₃, La_{0,7}Ca_{0,3}MnO₃, La_{0,958}Li_{0,025}Ti_{0,1}Mn_{0,9}O₃, La_{0,65}Ca_{0,35}Ti_{0,1} Mn_{0,9}O₃, La_{0,799}Na_{0,199}MnO_{2,97}, La_{0,88}Na_{0,099}Mn_{0,977}O₃, La_{0,877}K_{0,096}Mn_{0,974}O₃, La_{0,65}Sr_{0,35}Mn_{0,95}Cn_{0,05}O₃, La_{0,7}Nd_{0,1}Na_{0,2}MnO₃, La_{0,5}Ca_{0,3}Sr_{0,2}MnO₃.

Auf Gd und Si basierende Verbindungen der allgemeinen Formel (V)

Gd₅(SiₓGe₁₋ₓ)₄

mit x Zahl von 0,2 bis 1
sind beispielsweise Gd₅(Si_{0,5}Ge_{0,5})₄, Gd₅(Si_{0,425}Ge_{0,575})₄, Gd₅(Si_{0,45}Ge_{0,55})₄, Gd₅(Si_{0,365}Ge_{0,635})₄, Gd₅(5i_{0,3}Ge_{0,7})₄, Gd₅(Si_{0,25}Ge_{0,75})₄.

Seltenerden-Elemente enthaltende Verbindungen sind Tb₅(Si₄₋ₓGeₓ) mit x = 0, 1, 2, 3, 4 oder XTiGe mit X = Dy, Ho, Tm, beispielsweise Tb₅Si₄, Tb₅(Si₃Ge), Tb(Si₂Ge₂), Tb₅Ge₄, DyTiGe, HoTiGe, TmTiGe.

Auf Mn und Sb oder As basierende Verbindungen der allgemeinen Formeln (VIII) und (IX) haben bevorzugt die Bedeutungen z = 0,05 bis 0,3, Z = Cr, Cu, Ge, As, Co.

Die erfindungsgemäß eingesetzten thermomagnetischen Materialien können in beliebiger geeigneter Weise hergestellt werden.

Die Herstellung der thermomagnetischen Materialien erfolgt beispielsweise durch Festphasenumsetzung der Ausgangselemente oder Ausgangslegierungen für das Material in einer Kugelmühle, nachfolgendes Verpressen, Sintern und Tempern unter I-nertgasatmosphäre und nachfolgendes langsames Abkühlen auf Raumtemperatur. Ein derartiges Verfahren ist beispielsweise in J. Appl. Phys. 99, 2006, 08Q107 beschrieben.

Auch eine Verarbeitung über das Schmelzspinnen ist möglich. Hierdurch ist eine homogenere Elementverteilung möglich, die zu einem verbesserten magnetokalorischen Effekt führt, vergleiche Rare Metals, Vol. 25, Oktober 2006, Seiten 544 bis 549. In dem dort beschriebenen Verfahren werden zunächst die Ausgangselemente in einer Argongas-atmosphäre induktionsgeschmolzen und sodann in geschmolzenem Zustand über eine Düse auf eine sich drehende Kupferwalze gesprüht. Es folgt ein Sintern bei 1000 °C und ein langsames Abkühlen auf Raumtemperatur.

Ferner kann für die Herstellung auf WO 2004/068512 verwiesen werden.

Die nach diesen Verfahren erhaltenen Materialien zeigen häufig eine große thermische Hysterese. Beispielsweise werden in Verbindungen des Fe₂P-Typs, die mit Germanium oder Silicium substituiert sind, große Werte für die thermische Hysterese in einem großen Bereich von 10 K oder mehr beobachtet.

Bevorzugt ist daher ein Verfahren zur Herstellung der thermomagnetischen Materialien, umfassend die folgenden Schritte:
a) Umsetzung von chemischen Elementen und/oder Legierungen in einer Stöchiometrie, die dem metallbasierten Material entspricht, in der Fest- und/oder Flüssigphase,
b) gegebenenfalls Überführen des Umsetzungsproduktes aus Stufe a) in einen Festkörper,
c) Sintern und/oder Tempern des Festkörpers aus Stufe a) oder b),
d) Abschrecken des gesinterten und/oder getemperten Festkörpers aus Stufe c) mit einer Abkühlgeschwindigkeit von mindestens 100 K/s.

Die thermische Hysterese kann signifikant vermindert werden und ein großer magnetokalorischer Effekt kann erreicht werden, wenn die metallbasierten Materialien nach dem Sintern und/oder Tempern nicht langsam auf Umgebungstemperatur abgekühlt werden, sondern mit einer hohen Abkühlgeschwindigkeit abgeschreckt werden. Dabei beträgt die Abkühlgeschwindigkeit mindestens 100 K/s. Bevorzugt beträgt die Abkühlgeschwindigkeit 100 bis 10000 K/s, besonders bevorzugt 200 bis 1300 K/s. Speziell bevorzugt sind Abkühlgeschwindigkeiten von 300 bis 1000 K/s.

Das Abschrecken kann dabei durch beliebige geeignete Kühlverfahren erreicht werden, beispielsweise durch Abschrecken des Festkörpers mit Wasser oder wasserhaltigen Flüssigkeiten, beispielsweise gekühltem Wasser oder Eis/Wasser-Mischungen. Die Festkörper können beispielsweise in eisgekühltes Wasser fallengelassen werden. Es ist ferner möglich, die Festkörper mit untergekühlten Gasen wie flüssigem Stickstoff abzuschrecken. Weitere Verfahren zum Abschrecken sind dem Fachmann bekannt. Vorteilhaft ist dabei ein kontrolliertes und schnelles Abkühlen.

Die übrige Herstellung der thermomagnetischen Materialien ist weniger kritisch, solange im letzten Schritt das Abschrecken des gesinterten und/oder getemperten Festkörpers mit der angegebenen Abkühlgeschwindigkeit erfolgt. Das Verfahren kann dabei auf die Herstellung beliebiger geeigneter thermomagnetischer Materialien für die magnetische Kühlung angewendet werden, wie sie vorstehend beschreiben sind.

In Schritt (a) des Verfahrens erfolgt die Umsetzung der Elemente und/oder Legierungen, die im späteren thermomagnetischen Material enthalten sind, in einer Stöchiometrie, die dem thermomagnetischen Material entspricht, in der Fest- oder Flüssigphase.

Vorzugsweise wird die Umsetzung in Stufe a) durch gemeinsames Erhitzen der Elemente und/oder Legierungen in einem geschlossenen Behältnis oder in einem Extruder, oder durch Festphasenumsetzung in einer Kugelmühle erfolgen. Besonders bevorzugt wird eine Festphasenumsetzung durchgeführt, die insbesondere in einer Kugelmühle erfolgt. Eine derartige Umsetzung ist prinzipiell bekannt, vergleiche die vorstehend aufgeführten Schriften. Dabei werden typischerweise Pulver der einzelnen Elemente oder Pulver von Legierungen aus zwei oder mehr der einzelnen Elemente, die im späteren thermomagnetischen Material vorliegen, in geeigneten Gewichtsanteilen pulverförmig vermischt. Falls notwendig, kann zusätzlich ein Mahlen des Gemisches erfolgen, um ein mikrokristallines Pulvergemisch zu erhalten. Dieses Pulvergemisch wird vorzugsweise in einer Kugelmühle aufgeheizt, was zu einer weiteren Verkleinerung wie auch guten Durchmischung und zu einer Festphasenreaktion im Pulvergemisch führt. Alternativ werden die einzelnen Elemente in der gewählten Stöchiometrie als Pulver vermischt und anschließend aufgeschmolzen.

Das gemeinsame Erhitzen in einem geschlossenen Behälter erlaubt die Fixierung flüchtiger Elemente und die Kontrolle der Stöchiometrie. Gerade bei Mitverwendung von Phosphor würde dieser in einem offenen System leicht verdampfen.

An die Umsetzung schließt sich ein Sintern und/oder Tempern des Festkörpers an, wobei ein oder mehrere Zwischenschritte vorgesehen sein können. Beispielsweise kann der in Stufe a) erhaltene Feststoff einer Formgebung unterzogen werden, bevor er gesintert und/oder getempert wird.

Alternativ ist es möglich, den aus der Kugelmühle erhaltenen Feststoff einem Schmelzspinnverfahren zuzuführen. Schmelzspinnverfahren sind an sich bekannt und beispielsweise in Rare Metals, Vol. 25, Oktober 2006, Seiten 544 bis 549 wie auch in WO 2004/068512 beschrieben.

Dabei wird die in Stufe a) erhaltene Zusammensetzung geschmolzen und auf eine sich drehende kalte Metallwalze gesprüht. Dieses Sprühen kann mittels Überdruck vor der Sprühdüse oder Unterdruck hinter der Sprühdüse erreicht werden. Typischerweise wird eine sich drehende Kupfertrommel oder -walze verwendet, die zudem gegebenenfalls gekühlt werden kann. Die Kupfertrommel dreht sich bevorzugt mit einer Oberflächengeschwindigkeit von 10 bis 40 m/s, insbesondere 20 bis 30 m/s. Auf der Kupfertrommel wird die flüssige Zusammensetzung mit einer Geschwindigkeit von vorzugsweise 10² bis 10⁷ K/s abgekühlt, besonders bevorzugt mit einer Geschwindigkeit von mindestens 10⁴ K/s, insbesondere mit einer Geschwindigkeit von 0,5 bis 2 x 10⁶ K/s.

Das Schmelzspinnen kann wie auch die Umsetzung in Stufe a) unter vermindertem Druck oder unter Inertgasatmosphäre durchgeführt werden.

Durch das Meltspinning wird eine hohe Verarbeitungsgeschwindigkeit erreicht, da das nachfolgende Sintern und Tempern verkürzt werden kann. Gerade im technischen Maßstab wird so die Herstellung der thermomagnetischen Materialien wesentlich wirtschaftlicher. Auch die Sprühtrocknung führt zu einer hohen Verarbeitungsgeschwindigkeit. Besonders bevorzugt wird das Schmelzespinnen (Melt spinning) durchgeführt.

Alternativ kann in Stufe b) ein Sprühkühlen durchgeführt werden, bei dem eine Schmelze der Zusammensetzung aus Stufe a) in einen Sprühturm gesprüht wird. Der Sprühturm kann dabei beispielsweise zusätzlich gekühlt werden. In Sprühtürmen werden häufig Abkühlgeschwindigkeiten im Bereich von 10³ bis 10⁵ K/s, insbesondere etwa 10⁴ K/s erreicht.

Das Sintern und/oder Tempern des Festkörpers erfolgt in Stufe c) vorzugsweise zunächst bei einer Temperatur im Bereich von 800 bis 1400 °C zum Sintern und nachfolgend bei einer Temperatur im Bereich von 500 bis 750 °C zum Tempern. Beispielsweise kann dann das Sintern bei einer Temperatur im Bereich von 500 bis 800 °C erfolgen. Für Formkörper/Festkörper erfolgt das Sintern besonders bevorzugt bei einer Temperatur im Bereich von 1000 bis 1300 °C, insbesondere von 1100 bis 1300 °C. Das Tempern kann dann beispielsweise bei 600 bis 700 °C erfolgen.

Das Sintern wird vorzugsweise für einen Zeitraum von 1 bis 50 Stunden, besonders bevorzugt 2 bis 20 Stunden, insbesondere 5 bis 15 Stunden durchgeführt. Das Tempern wird vorzugsweise für eine Zeit im Bereich von 10 bis 100 Stunden, besonders bevorzugt 10 bis 60 Stunden, insbesondere 30 bis 50 Stunden durchgeführt. Die exakten Zeiträume können dabei je nach Material den praktischen Anforderungen angepasst werden.

Bei Einsatz des Schmelzspinnverfahrens kann der Zeitraum für ein Sintern oder Tempern stark verkürzt werden, beispielsweise auf Zeiträume von 5 Minuten bis 5 Stunden, bevorzugt 10 Minuten bis 1 Stunde. Im Vergleich zu den sonst üblichen Werten von 10 Stunden für das Sintern und 50 Stunden für das Tempern resultiert ein extremer Zeitvorteil.

Durch das Sintern/Tempern kommt es zu einem Anschmelzen der Korngrenzen, so dass sich das Material weiter verdichtet.

Durch das Schmelzen und schnelle Abkühlen in Stufe b) kann damit die Zeitdauer für Stufe c) erheblich vermindert werden. Dies ermöglicht auch eine kontinuierliche Herstellung der thermomagnetischen Materialien.

Der erfindungsgemäß hergestellte offenzellige poröse Formkörper kann beispielsweise in Form eines offenzelligen Schaums vorliegen. Er kann beispielsweise in Form einer Platte, Wabe, eines Monolithen oder in Form einer Beschichtung auf einem Substrat vorliegen.

Die erfindungsgemäße Herstellung der offenzelligen, porösen Struktur erfolgt nach den in den Ansprüchen definierten Verfahren.

Ein Verfahren zur Herstellung der Formkörper ist dadurch gekennzeichnet, dass man ein Pulver des thermomagnetischen Materials einer Formgebung unterzieht, bei der die Teilchen des Pulvers so verbunden werden, dass sich die offenzellige poröse Struktur ausbildet. Dabei kann das Pulver beispielsweise durch Verpressen, gegebenenfalls in Verbindung mit einer Wärmebehandlung, oder durch ein Sinterverfahren oder durch ein Schaumbildungsverfahren verarbeitet werden.

Bei der Verarbeitung durch Verpressen liegt das Pulver des thermomagnetischen Materials in einer spezifischen Teilchengrößenverteilung vor, die die gewünschte Porosität sicherstellt. Vorzugsweise beträgt der mittlere Teilchendurchmesser für diese Anwendung das 20- bis 30-fache des gewünschten mittleren Porendurchmessers. Das Pulver wird dabei in eine für die Wärmeübertragung geeignete Form gepresst. Die Porengrößenverteilung wird durch die Teilchengrößenverteilung und den Anpressdruck eingestellt. Dabei können auch Additive mitverwendet werden, um die Presseigenschaften und die Eigenschaften des erhaltenen Presslings zu verbessern. Beispielsweise können Schmiermittel oder Tablettierhilfsmittel mitverwendet werden. Eine optimale Porengrößenverteilung richtet sich nach den erforderlichen Vorgaben für den Druckabfall und sollte so optimiert werden, dass die Energieverluste minimiert werden.

Das Verpressen kann beispielsweise als kaltes Verpressen oder als Heißverpressen durchgeführt werden. An das Verpressen kann sich das bereits beschriebene Sinterverfahren anschließen.

Beim Sinterverfahren oder Sintermetallverfahren werden die Pulver des thermomagnetischen Materials zunächst in die gewünschte Form des Formkörpers gebracht, und sodann durch Sintern miteinander verbunden, wodurch der gewünschte Formkörper erhalten wird. Das Sintern kann ebenfalls wie vorstehend beschrieben durchgeführt werden.

Ein Schaumbildungsverfahren kann in beliebiger geeigneter Weise durchgeführt werden, beispielsweise wird ein Inertgas in eine Schmelze des thermomagnetischen Materials so eingeblasen, dass eine offenzellige, poröse Struktur resultiert. Auch der Einsatz anderer Treibmittel ist möglich.

Eine Schaumbildung kann auch durch heftiges Schlagen, Schütteln, Verspritzen oder Rühren der Schmelze des thermomagnetischen Materials erfolgen.

Ferner ist es erfindungsgemäß möglich, das Pulver des thermomagnetischen Materials in ein polymeres Bindemittel einzubringen, die resultierende thermoplastische Formmasse einer Formgebung zu unterziehen, das Bindemittel zu entfernen und den resultierenden Grünkörper zu sintern. Es ist auch möglich, das Pulver des thermomagnetischen Materials mit einem polymeren Bindemittel zu beschichten und durch Verpressen, gegebenenfalls unter Wärmebehandlung, einer Formgebung zu unterziehen.

Es können erfindungsgemäß dabei beliebige geeignete organische Bindemittel eingesetzt werden, die als Bindemittel für thermomagnetische Materialien einsetzbar sind. Dabei handelt es sich insbesondere um oligomere oder polymere Systeme, jedoch können auch niedermolekulare organische Verbindungen wie beispielsweise Zucker eingesetzt werden.

Beispielsweise können Paraffinwachse oder synthetische organische Harze wie Polystyrol eingesetzt werden. Zudem können Polyethylenglykole eingesetzt werden, die beispielsweise ein Molekulargewicht im Bereich von 4000 bis 8000, vorzugsweise 5000 bis 7000, aufweisen. Derartige Bindemittelsysteme sind beispielsweise in GB-A-2 105 312 und EP-A-0 127 367 beschrieben. Auf derartige Systeme wird beispielsweise auch in US 5,573,055 hingewiesen.

Als organische Bindemittel kommen insbesondere natürliche und synthetische Polymere in Betracht. Natürliche Polymere sind beispielsweise Cellulose und Cellulose-Derivate wie Carboxymethylcellulose, Celluloseacetat, Celluloseacetobutyrate wie auch andere Cellulose-Ester und Cellulose-Ether. Weitere Cellulose-Derivate können durch Oxidationsreaktionen oder durch Wasserabspaltung gebildet werden. In diesem Zusammenhang kann auf die Stichwörter "Cellulose", "Cellulose-Derivate", "Cellulose-Ester" und "Cellulose-Ether" in Römpp, Chemielexikon, 9. Aufl., verwiesen werden.

Weitere natürliche Polymere sind Casein oder Stärke.

Ferner können Polysacharide und auch niedermolekulare Zucker eingesetzt werden. Geeignete synthetische Bindemittel sind beispielsweise Polyvinylpyrrolidon und davon abgeleitete Polymere wie Vinylpyrrolidon-Styrol-Copolymere, Vinylpyrrolidon-Vinylacetat-Copolymere und ähnliche Polymere. Auch Polyalkylenglycole und deren Ether können eingesetzt werden, insbesondere Polyethylenglycol. Die Polymere können pulverförmig, körnig oder latexförmig eingesetzt werden.

Ferner kommen die technischen Kunststoffe wie Polyolefine, beispielsweise Polyethylene und Polypropylene, Polystyrole, Polyvinylchloride, Polyamide, Polyurethane, Polyester, Polyether, Polysulfone, Polyetherketone, Polycarbonate, usw. in Betracht. Auch polymere Harze können erfindungsgemäß eingesetzt werden, beispielsweise Polyester-Harze oder Epoxid-Harze. Es kann sich dabei um Ein-Komponenten- oder ZweiKomponenten-Systeme handeln. Organische Bindemittel werden üblicherweise in Mengen von 0,5 - 10 Gew.-%, bezogen auf die gesamte Salzmischung, eingesetzt.

Einsetzbare Polymer-Dispersionen können beispielsweise auf Acrylestern oder Styrol/Butadien basieren.

Beispiele geeigneter Polymere sind Polystyrol, Polyethylen, Polyvinylchlorid, Polybutadiein, Polyacrylnitril, Polymethylmethacrylate, Polyethylenterephthalate, Polyamid 6, Polyamid 66. Spezielle Polymer-Klassen sind Acetale, Polyamide, Polyamidimide, Polyarylate, Polycarbonate, Polyester, Polyether, Polyetherketone, Polyetherimide, Polyimide, Polyphenylenoxide, Polyphenylensulfide und Polysulfone. Unter Harzen können insbesondere Phenol-Formaldehyd-Harze, Harnstoff-Formaldehyd-Harze, ungesättigte Polyesterharze, Epoxyharze und Melamin-Formaldhehyd-Harze genannt werden. Unter Kautschuken können insbesondere Styrol-Butadien-Kautschuke, Polybutadienkautschuke, Ethylen-Propylen-Kautschuke, Polychloropren-Kautschuke, Polyisopren-Kautschuke, Nitril-Kautschuke, Butyl-Kautschuke, Silikon-Kautschuke und Urethan-Kautschuke genannt werden.

Die Polymere können dabei radikalisch, anionisch, kationisch oder durch Strahlung polymerisiert sein. Erfindungsgemäß eingesetzte organische Polymere sind insbesondere vinylische Polymere. Diese Copolymere können durch beliebige geeignete Verfahren auf die Salze zur Bildung der verfestigten Salzkerne aufgebracht werden. Sie können beispielsweise in geschmolzener oder gelöster Form aufgebracht werden. Die im Einzelfall notwendigen und geeigneten Mengen können durch den Fachmann durch einfache Handversuche ermittelt werden.

Eine spezielle Klasse geeigneter Polymere sind Polyacetale, insbesondere Polyoxymethylene und deren Copolymere. Diese werden häufig anstelle von Paraffin- oder Polyolefin-Dispergiermitteln eingesetzt. Es können auch Mischungen aus Polyoxymethylenhomo- oder - Copolymerisaten und einem damit nicht mischbaren Polymerisat als Bindemittel eingesetzt werden. Polyoxymethylenhomo- oder - Copolymerisate haben vorzugsweise einen Schmelzpunkt von mindestens 150 °C und Molekulargewichte (Gewichtsmittelwert) im Bereich von 5000 bis 150000. Es können beispielsweise Mischungen aus Polyoxymethylen, Homo- und Copolymerisaten und Polymeren auf Basis von Olefinen, vinyl-aromatischen Monomeren, Vinylestern, Vinylalkylethern oder Alkylmethacrylaten eingesetzt werden. Geeignete Polymere sind beispielsweise in EP-B-0 5951 460 und EP-B-1 276 811 beschrieben. Auch für Polyoxymethylene kann zudem auf EP-A-0 413 231, EP-A-0 444 475, EP-A-0 465 940 und EP-A-0 446 708 verwiesen werden. Zur Entfernung des Bindemittels kann dieses mit einer gasförmigen, säurehaltigen Atmosphäre behandelt werden. Entsprechende Verfahren sind beispielsweise in DE-A-39 29 869 und DE-A-40 00 278 sowie EP-B-1 276 811 und EP-B-0 951 460 beschrieben.

Als Bindemittel erfindungsgemäß geeignete organische Polymere sind beispielsweise insbesondere die für Spritzgussanwendungen eingesetzten Polymere.

Weitere geeignete organische Bindemittel sind beispielsweise Bitumen und Teer. Für weitere geeignete Bindemittel kann auf das Stichwort "Bindemittel" in Römpp Chemielexikon, 9. Aufl., verwiesen werden.

Das thermomagnetische Pulver wird mit einem der geeigneten organischen Bindemittel vermischt und in eine Form gefüllt. Dies kann beispielsweise durch Gießen oder Spritzgießen erfolgen. Sodann wird das Polymer katalytisch oder thermisch entfernt und soweit gesintert, dass ein poröser Körper mit offenzelliger Struktur gebildet wird.

Das Pulver kann auch beispielsweise durch Sprühbeschichtung mit dem Bindemittel beschichtet werden, beispielsweise in einem Fluidbett-Sprühbeschichtungsverfahren. Sodann wird das polymerbeschichtete Material in eine Form gebracht und so mit Wärme und/oder Druck behandelt, dass eine poröse offenzellige Struktur gebildet wird. Dabei kann das organische Bindemittel als Umhüllung auf den Teilchen verbleiben. Der Vorteil dieses Vorgehens besteht darin, dass die Legierungsteilchen mit dem Polymer versiegelt werden und nicht in direktem Kontakt mit den Wärmetauscherfluiden stehen. Damit können die Anforderungen an die Korrosionsbeständigkeit der thermomagnetischen Materialien verringert werden.

Die jeweiligen Verfahren werden so gesteuert, dass offenzellige, poröse Formkörper resultieren, die eine geeignete Kombination aus hoher Wärmeübertragung, geringem Durchflusswiderstand und hoher magnetokalorischer Dichte aufweisen. Bevorzugt ist dabei ein optimales Verhältnis von hoher magnetokalorischer Dichte und ausreichender Porosität, so dass eine effiziente Wärmeabführung bzw. ein effizienter Wärmetausch gewährleistet sind. Anders ausgedrückt zeigen die erfindungsgemäß hergestellten Formkörper ein hohes Verhältnis von Oberfläche zu Volumen. Durch die große Oberfläche ist es möglich, große Wärmemengen aus dem Material herauszutransportieren und in ein Wärmeüberträgermedium einzubringen. Die Struktur sollte mechanisch stabil sein, um den mechanischen Belastungen durch ein fluides Kühlmedium gewachsen zu sein. Zudem sollte der Fließwiderstand so gering sein, dass nur ein geringer Druckabfall durch das poröse Material resultiert. Das magnetische Feldvolumen sollte vorzugsweise minimiert werden.

Die erfindungsgemäß erhaltenen offenzelligen porösen Formkörper werden bevorzugt in Kühlschränken, Klimaanlagen, Wärmepumpen bzw. Wärmetauschern oder in der Stromerzeugung durch direkte Umwandlung von Wärme verwendet. Dabei sollten die Materialien einen großen magnetokalorischen Effekt in einem Temperaturintervall zwischen -100 °C und +150 °C zeigen.

Die Wärmeübergangsrate limitiert die Zyklusgeschwindigkeit und hat damit einem großen Einfluss auf die Leistungsdichte.

Bei der Stromgewinnung ist um das thermomagnetische Material eine Spule aus einem elektrisch leitfähigen Material angeordnet. In dieser Spule wird durch Veränderung des Magnetfeldes bzw. der Magnetisierung ein Strom induziert, der zur Verrichtung von elektrischer Arbeit verwendet werden kann. Vorzugsweise werden dabei die Spulengeometrie und die Geometrie des thermomagnetischen Materials so gewählt, dass eine möglichst hohe Energieausbeute mit einem möglichst geringen Druckverlust resultiert. Die Spulenwindungsdichte (Windungen/Länge), die Spulenlänge, der Ladungswiderstand und die Temperaturveränderung des thermomagnetischen Materials sind wichtige Einflussgrößen für die Energieausbeute.

Das thermomagnetische Material befindet sich in einem äußeren Magnetfeld. Dieses Magnetfeld kann durch Permanentmagnete oder Elektromagnete erzeugt werden. Elektromagnete können herkömmliche Elektromagnete oder supraleitende Magnete sein.

Vorzugsweise ist der thermomagnetische Generator so ausgelegt, dass die Wärmeenergie aus der Geothermie oder aus der Abwärme industrieller Prozesse oder aus Solarenergie oder Sonnenkollektoren, z. B. in der Photovoltaik umgewandelt werden kann. Gerade in Regionen mit geothermischer Aktivität erlaubt ein thermomagnetischer Generator eine einfache Stromerzeugung unter Ausnutzung der Erdwärme. In industriellen Prozessen fällt häufig Prozesswärme oder Abwärme an, die üblicherweise in die Umgebung abgeleitet und nicht weiter genutzt wird. Auch Abwässer weisen häufig eine höhere Temperatur beim Austritt als beim Eintritt auf. Gleiches gilt für Kühlwasser. Damit erlaubt der thermomagnetische Generator die Gewinnung von elektrischer Energie aus Abwärme, die ansonsten verloren geht. Dadurch, dass der thermomagnetische Generator im Bereich der Raumtemperatur betrieben werden kann, ist es möglich, diese Abwärmen zu nutzen und in elektrische Energie umzuwandeln. Die Energieumwandlung erfolgt dabei vorzugsweise bei Temperaturen im Bereich von 20 bis 150 °C, besonders bevorzugt bei Temperaturen im Bereich von 40 bis 120 °C.

In (konzentrierten) Photovoltaikanlagen werden häufig hohe Temperaturen erreicht, so dass gekühlt werden muss. Diese abzuführende Wärme kann in Strom umgewandelt werden.

Zur Stromerzeugung wird das thermomagnetische Material abwechselnd mit einem warmen Reservoir und einem kalten Reservoir kontaktiert und damit einem Aufwärmund Abkühlungszyklus unterworfen. Die Zykluszeit wird dabei nach den jeweiligen technischen Voraussetzungen gewählt.

Die nachfolgenden Beispiele beschreiben die Herstellung geeigneter thermomagnetischer Materialien.

### Beispiele

### Beispiel 1

Evakuierte Quarzampullen, die gepresste Proben von MnFePGe enthielten, wurden für 10 Stunden bei 1100 °C gehalten, um das Pulver zu sintern. Auf dieses Sintern folgte ein Tempern bei 650 °C für 60 Stunden, um eine Homogenisierung herbeizuführen. Anstelle eines langsamen Abkühlens im Ofen auf Raumtemperatur wurden die Proben jedoch sofort in Wasser bei Raumtemperatur gequencht. Das Quenchen in Wasser verursachte einen gewissen Grad von Oxidation an den Probenoberflächen. Die äußere oxidierte Schale wurde durch Ätzen mit verdünnter Säure entfernt. Die XRD-Muster zeigen, dass alle Proben in einer Struktur des Fe₂P-Typs kristallisieren.

Folgende Zusammensetzungen wurden dabei erhalten:
Mn_{1,1}Fe_{0,9}P_{0,81}Ge_{0,19}; Mn_{1,1}Fe_{0,9}P_{0,78}Ge_{0,22}, Mn_{1,1}Fe_{0,9}P_{0,75}Ge_{0,25} und Mn_{1,2}Fe_{0,8}P_{0,81}Ge_{0,19}. Die beobachteten Werte für die thermische Hysterese sind für diese Proben in der angegebenen Reihenfolge 7 K, 5 K, 2 K und 3 K. Gegenüber einer langsam abgekühlten Probe, die eine thermische Hysterese von mehr als 10 K aufweist, konnte die thermische Hysterese stark vermindert werden.

Die thermische Hysterese wurde dabei in einem Magnetfeld von 0,5 Tesla bestimmt.

Die Curie-Temperatur kann durch Variation des Mn/Fe-Verhältnisses und der Ge-Konzentration eingestellt werden, ebenso der Wert für die thermische Hysterese.

Die Änderung der magnetischen Entropie, berechnet aus der Gleichstrommagnetisierung unter Verwendung der Maxwell-Beziehung beträgt für eine maximale Feldänderung von 0 bis 2 Tesla für die ersten drei Proben 14 J/kgK, 20 J/kgK bzw. 12,7 J/kgK.

Die Curie-Temperatur und die thermische Hysterese nehmen mit zunehmendem Mn/Fe-Verhältnis ab. Im Ergebnis zeigen die MnFePGe-Verbindungen relativ große MCE-Werte in niedrigem Feld. Die thermische Hysterese dieser Materialien ist sehr klein.

### Beispiel 2

### Schmelzspinnen von MnFeP(GeSb)

Die polykristallinen MnFeP(Ge,Sb)-Legierungen wurden zunächst in einer Kugelmühle mit hohem Energie-Eintrag und durch Festphasenreaktionsverfahren hergestellt, wie sie in WO 2004/068512 und J. Appl. Phys. 99,08 Q107 (2006) beschrieben sind. Die Materialstücke wurden sodann in ein Quarzrohr mit einer Düse gegeben. Die Kammer wurde auf ein Vakuum von 10⁻² mbar evakuiert und anschließend mit Argongas hoher Reinheit gefüllt. Die Proben wurden durch Hochfrequenz geschmolzen und durch die Düse versprüht aufgrund einer Druckdifferenz zu einer Kammer mit einer rotierenden Kupfertrommel. Die Oberflächengeschwindigkeit des Kupferrades konnte eingestellt werden, und Abkühlgeschwindigkeiten von etwa 10⁵ K/s wurden erreicht. Anschließend wurden die gesponnenen Bänder bei 900 °C für eine Stunde getempert.

Aus der Röntgendiffraktometrie geht hervor, dass alle Proben im hexagonalen Fe₂P-Strukturmuster kristallisieren. Im Unterschied zu nicht nach dem Schmelzspinnverfahren hergestellten Proben, wurde keine kleinere Verunreinigungsphase von MnO beobachtet.

Die erhaltenen Werte für die Curie-Temperatur, die Hysterese und die Entropie wurden für unterschiedliche Umfangsgeschwindigkeiten beim Schmelzspinnen bestimmt. Die Ergebnisse sind in den nachstehenden Tabellen 1 und 2 aufgeführt. Jeweils wurden geringe Hysterese-Temperaturen bestimmt.

**Tabelle 1:**

| **Bänder** | **V (m/s)** | **T_{c} (K)** | **ΔT_{hys} (K)** | **-ΔS(J/kgK)** |
|---|---|---|---|---|
| Mn_{1,2}Fe_{0,8} P_{0,73}Ge_{0,25}Sb_{0,02} | 30 | 269 | 4 | 12,1 |
| Mn_{1,2}Fe_{0,8}P_{0,70}Ge_{0,20}Sb_{0,10} | 30 | 304 | 4,5 | 19,0 |
| | 45 | 314 | 3 | 11,0 |
| MnFeP_{0,7o}Ge_{0,20}Sb_{0,10} | 20 | 306 | 8 | 17,2 |
| | 30 | 340 | 3 | 9,5 |
| MnFeP_{0,75}Ge_{0,25} | 20 | 316 | 9 | 13,5 |
| | 40 | 302 | 8 | - |
| Mn_{1,1}Fe_{0,9}P_{0,78}Ge_{0,22} | 20 | 302 | 5 | - |
| | 40 | 299 | 7 | - |
| Mn_{1,1}Fe_{0,9}P_{0,75}Ge_{0,25} | 30 | 283 | 9 | 11,2 |
| Mn_{1,2}Fe_{0,8}P_{0,75}Ge_{0,25} | 30 | 240 | 8 | 14,2 |
| Mn_{1,1}Fe_{0,9}P_{0,73}Ge_{0,27} | 30 | 262 | 5 | 10,1 |

| **Bulk** | | **T_{c} (K)** | **ΔT_{hys} (K)** | **-ΔS(J/kgK)** |
|---|---|---|---|---|
| MnFeP_{0,75}Ge_{0,25} | | 327 | 3 | 11,0 |
| Mn_{1,1}Fe_{0,9}P_{0,81}Ge_{0,19} | | 260 | 7 | 14,0 |
| Mn_{1,1}Fe_{0,9}P_{0,78}Ge_{0,22} | | 296 | 5 | 20,0 |
| Mn_{1,1}Fe_{0,9}P_{0,75}Ge_{0,25} | | 330 | 2 | 13,0 |
| Mn_{1,2}Fe_{0,8}P_{0,81}Ge_{0,19} | | 220 | 3 | 7,7 |
| Mn_{1,2}Fe_{0.8}P_{0,75}Ge_{0,25} | | 305 | 3 | - |
| Mn_{1,2}Fe_{0,8}P_{0,73}Ge_{0,27} | | 313 | 5 | - |
| Mn_{1,3}Fe_{0,7}P_{0,78}Ge_{0,22} | | 203 | 3 | 5,1 |
| Mn_{1,3}Fe_{0,7}P_{0,75}Ge_{0,25} | | 264 | 1 | - |

**Tabelle 2**

| **Bulk** | **T_{c} (K)** | **ΔT_{hys} (K)** | **-ΔS(J/kgK)** |
|---|---|---|---|
| MnFeP_{0,75}Ge_{0,25} | 327 | 3 | 11,0 |
| Mn_{1,16}Fe_{0,84}P_{0,75}Ge_{0,25} | 330 | 5 | 22,5 |
| Mn_{1,18}Fe_{0,82}P_{0,75}Ge_{0,25} | 310 | 3 | 16,1 |
| Mn_{1,2o}Fe_{0,80}P_{0,75}Ge_{0,25} | 302 | 1 | 12,0 |
| Mn_{1,22}Fe_{0,78}P_{0,75}Ge_{0,25} | 276 | 4 | 11,7 |
| Mn_{1,26}Fe_{0,74}P_{0,75}Ge_{0,25} | 270 | 1 | 8,5 |
| Mn_{1,1}Fe_{0,9}P_{0,81}Ge_{0,19} | 260 | 6 | 13,8 |
| Mn_{1,1}Fe_{0,9}P_{0,78}Ge_{0,22} | 296 | 4 | 20,0 |
| Mn_{1,1} Fe_{0,9}P_{0,77}Ge_{0,23} | 312 | 2 | 14,6 |
| Mn_{1,1}Fe_{0,9}P_{0,75}Ge_{0,25} | 329 | 2 | 13,0 |

| **Bänder** | | | |
|---|---|---|---|
| Mn_{1,20}Fe_{0,80}P_{0,75}Ge_{0,25} | 288 | 1 | 20,3 |
| Mn_{1,22}Fe_{0,78}P_{0,75}Ge_{0,25} | 274 | 2 | 15,3 |
| Mn_{1,24}Fe_{0,76}P_{0,75}Ge_{0,25} | 254 | 2 | 16,4 |
| Mn_{1,26}Fe_{0,74}P_{0,75}Ge_{0,25} | 250 | 4 | 14,4 |
| Mn_{1,30}Fe_{0,70}P_{0,75}Ge_{0,25} | 230 | 0 | 9,8 |

## Patentansprüche

1. Verfahren zur Herstellung von offenzelligen, porösen Formkörper für Wärmetauscher mit einer Porosität von 30 bis 60 %, enthaltend ein thermomagnetisches Material, das ausgewählt ist aus
(1) Verbindungen der allgemeinen Formel (I)
(A_{y}B_{1-y})_{2+δ}C_{w}DₓE_{z} (I)
mit der Bedeutung
A Mn oder Co,
B Fe, Cr oder Ni,
C, D, E mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge oder Si ist,
δ Zahl im Bereich von - 0,1 bis 0,1
w, x, y, z Zahlen im Bereich von 0 bis 1, wobei w + x + z = 1 ist;
(2) auf La und Fe basierenden Verbindungen der allgemeinen Formeln (II) und/oder (III) und/oder (IV)
La(FeₓAl₁₋ₓ)₁₃H_{y} oder La(FeₓSi₁₋ₓ)₁₃H_{y} (II)
mit
x Zahl von 0,7 bis 0,95
y Zahl von 0 bis 3;
La(FeₓAl_{y}Co_{z})₁₃ oder La(FeₓSi_{y}Co_{z})₁₃ (III)
mit
x Zahl von 0,7 bis 0,95
y Zahl von 0,05 bis 1 - x
z Zahl von 0,005 bis 0,5;
LaMnₓFe₂₋ₓGe (IV)
mit
x Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5
(4) auf Gd und Si basierenden Verbindungen der aligemeinen Formel (V)
Gd₅(SiₓGe₁₋ₓ)₄ (V)
mit x Zahl von 0,2 bis 1,
(5) Fe2P-basierten Verbindungen,
(6) Manganiten des Perovskit-Typs,
(7) Seltenerden-Elemente enthaltenden Verbindungen der allgemeinen Formeln (VI) und (VII)
Tb₅(Si₄₋ₓGeₓ) (VI)
mit x = 0, 1, 2, 3, 4
XTiGe (VII)
mit X = Dy, Ho, Tm,
(8) auf Mn und Sb oder As basierenden Verbindungen der allgemeinen Formeln (VIII) und (IX)
Mn₂₋ₓZₓSb (VIII)
Mn₂ZₓSb₁₋ₓ (IX)
mit
Z Cr, Cu, Zn, Co, V, As, Ge,
x 0,01 bis 0,5,
wobei Sb durch As ersetzt sein kann, sofern Z nicht As ist,
**dadurch gekennzeichnet, dass** ein Pulver des thermomagnetischen Materials in ein polymeres Bindemittel eingebracht wird, die resultierende thermoplastische Formmasse einer Formgebung unterzogen wird, das Bindemittel entfernt wird und der resultierende Grünkörper gesintert wird, oder
das Pulver des thermomagnetischen Materials mit einem polymeren Bindemittel beschichtet wird und durch Verpressen, gegebenenfalls unter Wärmebehandlung, einer Formgebung unterzogen wird, oder
eine Schaumbildung durch heftiges Schlagen, Schütteln, Verspritzen oder Rühren der Schmelze des thermomagnetischen Materials erfolgt.

2. Verfahren nach Anspruch 1, **dadurch gekennzeichnet, dass** das thermomagnetische Material ausgewählt ist aus mindestens quarternären Verbindungen der allgemeinen Formel (I), die neben Mn, Fe, P und gegebenenfalls Sb zusätzlich Ge oder Si oder As oder Fe und Si oder Ge und As oder Si und As, oder Ge, Si und As enthalten.

3. Verfahren nach einem der Ansprüche 1 oder 2, **dadurch gekennzeichnet, dass** der Formkörper in Form eines offenzelligen Schaums vorliegt.

4. Verfahren nach einem der Ansprüche 1 bis 3, **dadurch gekennzeichnet, dass** der Formkörper in Form einer Platte, Wabe, eines Monolithen oder in Form einer Beschichtung auf einem Substrat vorliegt.

5. Verfahren nach einem der Ansprüche 1 oder 2, wobei das Pulver des thermomagnetischen Materials mit einem polymeren Bindemittel beschichtet wird und durch Verpressen, gegebenenfalls unter Wärmebehandlung, einer Formgebung unterzogen wird und das Bindemittel als Umhüllung auf den Teilchen des Pulvers verbleibt.

## Claims

1. A process for producing open-cell porous shaped bodies for heat exchangers having a porosity of from 30 to 60%, comprising a thermomagnetic material selected from
(1) compounds of the general formula (I)
(A_{y}B_{1-y})_{2+δ}C_{w}DₓE_{z} (I)
where
A is Mn or Co,
B is Fe, Cr or Ni,
C, D and E at least two of C, D and E are different, have a non-vanishing concentration and are selected from P, B, Se, Ge, Ga, Si, Sn, N, As and Sb, where at least one of C, D and E is Ge or Si,
δ is a number in the range from -0.1 to 0.1,
w, x, y, z are numbers in the range from 0 to 1, where w + x + z = 1;
(2) La- and Fe-based compounds of the general formulae (II) and/or (III) and/or (IV)
La(FeₓAl₁₋ₓ)₁₃H_{y} or La(FeₓSi₁₋ₓ)₁₃H_{y} (II)
where
x is a number from 0.7 to 0.95,
y is a number from 0 to 3;
La(FeₓAl_{y}Co_{z})₁₃ or La(FeₓSi_{y}Co_{z})₁₃ (III)
where
x is a number from 0.7 to 0.95,
y is a number from 0.05 to 1 - x,
z is a number from 0.005 to 0.5;
LaMnₓFe₂₋ₓGe (IV)
where
x is a number from 1.7 to 1.95 and
(3) Heusler alloys of the MnTP type where T is a transition metal and P is a p-doping metal having an electron count per atom e/a in the range from 7 to 8.5,
(4) Gd- and Si-based compounds of the general formula (V)
Gd₅(SiₓGe₁₋ₓ)₄ (V)
where x is a number from 0.2 to 1,
(5) Fe₂P-based compounds,
(6) manganites of the perovskite type,
(7) compounds which comprise rare earth elements and are of the general formulae (VI) and (VII)
Tb₅(Si₄₋ₓGeₓ) (VI)
where x = 0, 1, 2, 3, 4,
XTiGe (VII)
where X = Dy, Ho, Tm,
(8) Mn- and Sb- or As-based compounds of the general formulae (VIII) and (IX)
Mn₂-ₓZₓSb (VIII)
Mn₂ZₓSb₁₋ₓ (IX)
where
Z is Cr, Cu, Zn, Co, V, As, Ge,
x is from 0.01 to 0.5,
where Sb may be replaced by As when Z is not As,
which comprises introducing a powder of the thermomagnetic material into a polymeric binder, subjecting the resulting thermoplastic molding material to shaping, removing the binder and sintering the resulting green body, or coating the powder of the thermomagnetic material with a polymeric binder and subjecting it to a shaping by pressing, optionally with heat treatment, or forming foam by vigorous beating, shaking, spraying or stirring of the melt of the thermomagnetic material.

2. The process according to claim 1, wherein the thermomagnetic material is selected from at least quaternary compounds of the general formula (I) which, as well as Mn, Fe, P and optionally Sb, additionally comprise Ge or Si or As or Fe and Si or Ge and As or Si and As, or Ge, Si and As.

3. The process according to either of claims 1 and 2, wherein the shaped body is present in the form of an open-cell foam.

4. The process according to any one of claims 1 to 3, wherein the shaped body is present in the form of a slab, honeycomb, a monolith or in the form of a coating on a substrate.

5. The process according to either of claims 1 and 2, wherein the powder of the thermomagnetic material is coated with a polymeric binder and subjected to a shaping by pressing, optionally with heat treatment, and the binder remains as encapsulation on the particles of the powder.

## Revendications

1. Procédé de fabrication de corps moulés poreux à cellules ouvertes pour échangeurs de chaleur, d'une porosité de 30 à 60 %, contenant un matériau thermomagnétique, qui est choisi parmi :
(1) les composés de formule générale (I)
**(A_{y}B_{1-y})_{2+δ}C_{w}DₓE_{z}** (I)
avec les significations
A Mn ou Co,
B Fe, Cr ou Ni,
C, D, E au moins deux éléments parmi C, D, E sont différents les uns des autres, ont une concentration non insignifiante et sont choisis parmi P, B, Se, Ge, Ga, Si, Sn, N, As et Sb, au moins un élément parmi C, D et E étant Ge ou Si,
δ un nombre dans la plage allant de -0,1 à 0,1,
w, x, y, z nombres dans la plage allant de 0 à 1, avec w + x + z = 1 ;
(2) les composés à base de La et Fe de formule générale (II) et/ou (III) et/ou (IV)
**La(FeₓAl₁₋ₓ)₁₃H_{y}** ou **La(FeₓSi₁₋ₓ)₁₃H_{y}** (**II**)
avec
x un nombre de 0,7 à 0,95,
y un nombre de 0 à 3 ;
**La(FeₓAl_{y}Co_{z})₁₃** ou **La(FeₓSi_{y}Co_{z})₁₃** **(III)**
avec
x un nombre de 0,7 à 0,95,
y un nombre de 0,05 à 1-x,
z un nombre de 0,005 à 0,5 ;
**LaMnₓFe₂₋ₓGe** **(IV)**
avec
x un nombre de 1,7 à 1,95, et
(3) les alliages de Heusler de type MnTP avec T = métal de transition et P = un métal à dopage p ayant un nombre d'électrons par atome e/a dans la plage allant de 7 à 8,5,
(4) les composés à base de Gd et Si de formule générale (V)
**Gd₅(SiₓGe₁₋ₓ)₄** **(V)**
avec x = un nombre de 0,2 à 1,
(5) les composés à base de Fe₂P,
(6) les manganites de type perovskite,
(7) les composés contenant des éléments de terres rares de formule générale (VI) et (VII)
**Tb₅(Si₄₋ₓGeₓ)** **(VI)**
avec x = 0, 1, 2, 3, 4,
**XTiGe** **(VII)**
avec X = Dy, Ho, Tm,
(8) les composés à base de Mn et Sb ou As de formule générale (VIII) et (IX)
**Mn₂₋ₓZₓSb** **(VIII)**
**Mn₂ZₓSb₁₋ₓ** **(IX)**
avec
Z Cr, Cu, Zn, Co, V, As, Ge,
x 0,01 à 0,5,
Sb pouvant être remplacé par As si Z ne représente pas As,
**caractérisé en ce qu'**une poudre du matériau thermomagnétique est introduite dans un liant polymère, le matériau de moulage thermoplastique résultant est soumis à un façonnage, le liant est éliminé, et le corps vert résultant est fritté, ou
la poudre du matériau thermomagnétique est revêtue avec un liant polymère et soumise à un façonnage par compression, éventuellement avec traitement thermique,
ou
une formation de mousse a lieu par battage puissant, secouage, pulvérisation ou agitation de la masse fondue du matériau thermomagnétique.

2. Procédé selon la revendication 1, **caractérisé en ce que** le matériau thermomagnétique est choisi parmi les composés au moins quaternaires de formule générale (I), qui contiennent en plus de Mn, Fe, P et éventuellement Sb en outre Ge ou Si ou As ou Fe et Si ou Ge et As ou Si et As, ou Ge, Si et As.

3. Procédé selon l'une quelconque des revendications 1 ou 2, **caractérisé en ce que** le corps moulé se présente sous la forme d'une mousse à cellules ouvertes.

4. Procédé selon l'une quelconque des revendications 1 à 3, **caractérisé en ce que** le corps moulé se présente sous la forme d'une plaque, d'un nid d'abeilles, d'un monolithe ou sous la forme d'un revêtement sur un substrat.

5. Procédé selon l'une quelconque des revendications 1 ou 2, dans lequel la poudre du matériau thermomagnétique est revêtue avec un liant polymère et soumise à un façonnage par compression, éventuellement avec traitement thermique, et le liant reste sur les particules de poudre en tant qu'enveloppe.
